# NEW EUROPEAN PATENT SPECIFICATION

(11) **EP 0 044 873 B2**
(45) Date of publication and mention of the opposition decision: **05.05.1993**
(45) Mention of the grant of the patent: 24.09.1986
(21) Application number: 81900326.0
(22) Date of filing: 28.01.1981
(51) Int. Cl.: G01F 1/72, G01F 1/68, F02D 5/02

(54) **APPARATUS FOR MEASURING AIR FLOW RATE USING HOT-WIRE TYPE AIR FLOWMETER**
VORRICHTUNG ZUM MESSEN EINER LUFT-DURCHFLUSSMENGE UNTER VERWENDUNG EINES HITZDRAHT-DURCHFLUSSMESSERS
DISPOSITIF DE MESURE DE LA VITESSE D'ECOULEMENT D'AIR UTILISANT UN DEBITMETRE D'AIR DU TYPE A FIL CHAUD

(30) Priority: 31.01.1980 JP 11346/80
(43) Date of publication of application: 03.02.1982
(73) Proprietor: Hitachi, Ltd., Chiyoda-ku, Tokyo 100 (JP)
(72) Inventor: YAMAUCHI, Teruo, Katsuta-shi Ibaraki 312 (JP); OHYAMA, Yoshishige, Katsuta-shi Ibaraki 312 (JP); KUROIWA, Hiroshi, Hitachi-shi Ibaraki 316 (JP); FUJIEDA, Mamoru, Nishiibaraki-gun Ibaraki 309-17 (JP); KIRISAWA, Tadashi, Hitachi-shi Ibaraki 319-12 (JP)
(74) Representative: Beetz & Partner Patentanwälte
(86) International application number: PCT/JP81/00018
(87) International publication number: WO 81/02202

(56) References cited:
- GB-A- 1 488 012
- JP-A-49 100 891
- JP-A-50 144 821
- JP-A-55 043 292
- JP-B-53 018 839
- US-A- 3 962 917

## Description

The present invention relates to an air-flow rate measuring device incorporating a hot wire type air- flow meter suitable for use in automobiles having a 4- cylinder engine.

A device for measuring the flow rate of intake air in an automobile engine, of the type having a resistance element having a resistance temperature coefficient and disposed in the intake air passage and adapted to measure the intake air-flow rate using the change in the resistance, is known by, for example, US-A-3 747 577. This resistance element is heated within the intake air passage of the engine by electric current supplied thereto, and the resistance value thereof is changed in accordance with the flow rate of the intake air in the intake passage.

In the automobile engines, the air-fuel ratio is controlled upon detection of the intake air-flow rate per one suction stroke of the engine by accumulating the intake air flow rate. It is, therefore, very important to precisely detect the flow rate of the intake air. An inaccurate measurement leads to an incorrect control of the air-fuel ratio.

The size of the hot wire type air-flow meter is advantageously small but this type of flow meter has the drawback that it cannot detect the direction of the air flow. Therefore, it is not possible to measure to correct or true intake air-flow rate by a mere accumulation of the output of the hot wire type air-flow meter, particularly in the low speed region of operation of a 4-cylinder internal combustion engine.

GB-B-1488012 discloses an analog type mass flow transducer for measuring the magnitude and the direction of the fluid mass flow. It comprises a heating element disposed in the fluid stream and three temperature sensors, the first and the second of them being disposed at opposite sides of the heating element in a certain distance, and the third temperature sensor being disposed near the heating element. These temperature sensors are thermocouples or negative or positive temperature coefficient resistors, i.e. cold wire sensors. For determining the direction of flow and hence the upstream temperature sensor the signals of the first and the second temperature sensors are compared in a comparator, whereas the mass flow rate is determined by comparing the output signals of the upstream temperature sensor and the third temperature sensor disposed near the heating element.

Accordingly, this known fluid-flow meter uses the 'heat-transport' principle for the detection of the flow direction and the 'heat-loss' principle for the determination of the fluid mass flow magnitude. The actual upstream temperature sensor detected by the comparator is connected to a second comparator by means of electronical switches.

This prior art device is based on temperature sensors having a cold wire type characteristic and is not adapted to be used for the determination of the true airflow rate in the intake passage of an internal combustion engine because of its complicated structure, the analog signal processing and too low response speed. Furthermore, this known apparatus does not comprise any means for calculating the difference between the forward and the reverse flow rates which is representative for the true air amount sucked into the cylinders of an internal combustion engine within predetermined time periods.

US-A-3 962 917 discloses an analog-type respir- ometerfor measuring the rate or amount of an airflow of respiration. It comprises a hot wire air flow rate measuring sensor disposed in the path of the air stream and continuously sensing the air flow rate irrespective of its flow direction. For discriminating between the senses of the air flow (inspiration/expira- tion) a pair of temperature sensitive elements are placed in the path of the airflowon the respective opposite sides of the hot wire sensor serving as a heating element as in the case of GB-B-1488012. The determination of the air flow direction is also based on the 'heat-transport' principle. This device issues a respiration rate and a respiration quantity signal with a discrimination made between expiration and inspiration.

Also this prior art device is not suited for the determination of the true air amount sucked into the cylinders of internal combustion engines because of its analog signal processing, its low response speed, and particularly the fact that the signals representative for the inspiration and the expiration rate are not processed by any means for determining the true air amount supplied in one direction within a predetermined time period.

Accordingly, it is the object of the invention is to provide an air-flow rate measuring device incorporating a hot wire type air-flow meter capable of measuring the true intake air-flow rate in automobile engines.

When a 4-cylinder engine is operating at a low speed, the intake air-flow rate (instantaneous value) of the engine fluctuates largely. In addition, in the region near the top dead center, the intake valve and the exhaust valve are opened simultaneously so that the intake air is forced back by the pressure which acts to reverse the flow of gas from the exhaust valve toward the intake valve. This reversing of the gas does not take place when the intake valve solely is kept opened.

The reversing of the gas takes place in the low speed region of 600 to 3000 min-' and in the region of low intake vacuum of below 133 mbar (-100 mmHg). The hot wire type air-flow meter produces the detection signal irrespective of the flowing direction of the air.

Representing the apparent intake air amount obtained by an integration or accumulation of the signal of the hot wire type air flow meter by Qₐ (m³), the air amount flowing in the reverse direction by 0₁ (m³), the air amount in the forward direction by Q₂(m³) and the true air amount by Qₒ (m³), the following equations (1) and (2) are established:

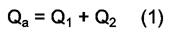

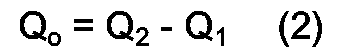

Thus, the true air-flow rate Qₒ is given as the difference between the flow rate Q₂ in the forward direction and the flow rate 0₁ in the backward direction.

According to the invention as claimed in claim 1, the apparent air-flow rate Qₐ is measured by integrating or accumulating the output of the hot wire type air- flow meter disposed in the intake air passage, and a signal representing the period of reversing flow is generated to divide the apparent air flow rate Qₐ into the flow rate Q₁ in the backward direction and the flow rate Q₂ in the forward direction. Then, the difference Q₂-Q₁ is calculated by an operation unit to determine the true air flow rate Qₒ.

According to an embodiment of the invention, there is provided a memory device adapted to memorize the crank angle corresponding to the engine speed, and a crank angle sensor adapted to produce a signal corresponding to the crank angle of the engine. The period of the backward flow of intake air is read out from the memory device in accordance with the output signal from the crank angle sensor, so that the apparent air-flow rate Qₐ is divided into the flow rate Q₁ in the backward direction and the flow rate Q₂ in the forward direction, and the difference Q₂-Q₁ is calculated by the operation unit to determine the true air-flow rate Qₒ.

Fig. 1 is a sectional view of an embodiment of the invention, showing particularly the mounting structure for a hot wire type sensor;
Fig. 2 is a block diagram of a signal processing unit according to an embodiment of the invention;
Fig. 3 is a graphical representation of an analog output waveform of a hot wire sensor;
Fig. 4 is a graphical representation of the period in which the reverse flow in the intake air takes place;
Fig. 5 is a block diagram of another embodiment;
Fig. 6 is a graphical representation of the content of a memory device;
Fig. 7 is a sectional view of still another embodiment;
Fig. 8 is a graphical representation of operation of the device shown in Fig. 7;
Fig. 9 is a sectional view of a further embodiment; and
Fig. 10 is a graphical representation of operation of the device shown in Fig. 9.

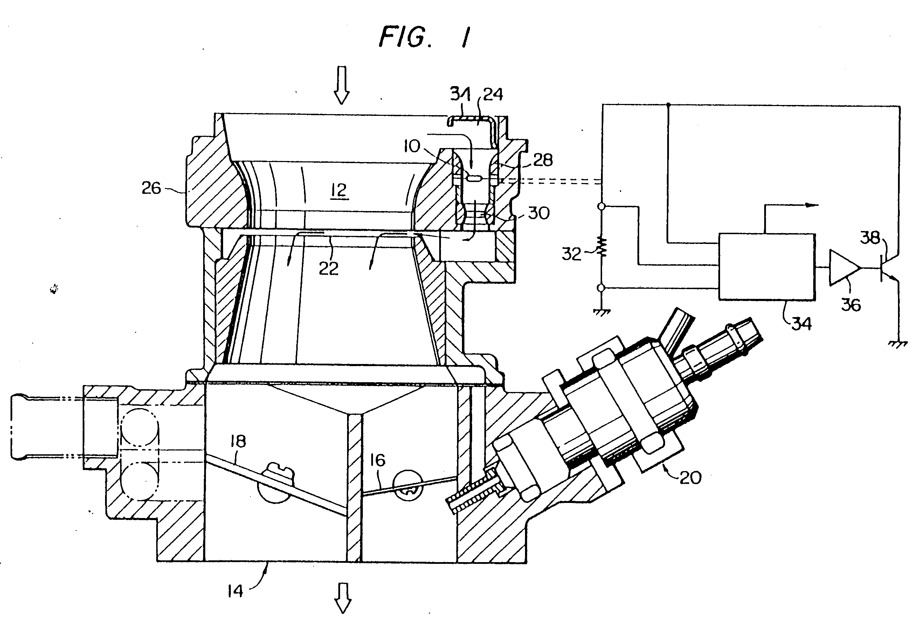

Fig. 1 shows how an air-flow rate sensor 10 is mounted. At the lower side of the main venturi 12, disposed is a throttle chamber 14 provided with a primary and a secondary throttle valve 16 and 18. Also, a fuel injector 20 for injecting the fuel at the downstream side of the primary throttle valve is secured to the throttle chamber 14. The air flows through an air filter (not shown) provided at the upstream side of the main venturi 12 and flows through the latter so as to be mixed with the fuel injected from the injector to form an air-fuel mixture which is supplied into the cylinder of the internal combustion engine.

A part of the intake air flows into a bypass passage 24 due to a pressure difference between the upstream side of the main venturi 12 and the slit 22, as indicated by an arrow. The bypass passage 24 is provided at a portion of a venturi chamber body 26 which forms the main venturi 12. Namely, the air which has passed through the bypass passage 24 merges in the flow in the main venturi 12 through a slit 22 formed around the inner wall of the main venturi 12.

The flow of intake air is made uniform by an air guiding plate 28 made of a metal or an insulating material disposed at the upstream side of the sensor 10. The guiding plate 28 has an aperture of preferably circular form. Accordingly, the bypass passage 24 preferably has a circular form An orifice 30 serves for maintaining a constant value of the ratio between the flow rate in the main venturi 12 and the flow rate in the bypass passage 24. This ratio is referred to as "shunting ratio". Adust cover 31 covers an area greater than the area of the aperture of the guiding plate 28, thereby to prevent dusts or other foreign matters from coming directly into the bypass passage 24.

The sensor 10, which is disposed in the bypass passage 24 and having an electric characteristic changeable in accordance with the air-flow rate, is grounded through a resistance 32. The sensor 10 and the resistance 32 constitute two sides of a bridge circuit.

The voltage appearing at the terminals of the resistance 32 is transmitted to the control circuit 34. The output from the circuit 34 is transmitted to an amplifier 36 the output of which is used for the control of a power transistor 38. The sensor 10 is connected at its one end to the collector of the power transistor 38. The electric current I flowing in the sensor 10 is detected by the resistance 32.

Also, the current I is controlled by the control circuit 34 and the transistor 38 in such a manner as to maintain a constant temperature of the sensor 10, i.e. a constant resistance value of the same.

Accordingly, the relationship between the current I and the air-flow rate Q is represented by the following equation:

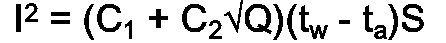

It is, therefore, possible to detect the air-flow rate Q by measuring the current I. In the above equation, the symbols C₁, C₂ and S represent constants, t_{w} represents the temperature of the sensor 10, and tₐ represents the temperature of the atmosphere.

The analog signal Qₐₙ (m³/min) representing the flow rate of air in the bypass passage 24 is supplied to an analog-to-digital converter (referred to as A/D converter, hereinunder) 40 and is converted into a digital signal Qₐ (m³/min). A data processing unit 42 picks up the digital signal Qₒ at each predetermined rotation angle of the crank shaft of the engine, e.g. at every 1°, and calculates the mean value of the digital signal at each predetermined angular movement of the crank shaft, e.g. at every 5°, to produce a signal Q₁ corresponding to the mean air-flow rate.

The crank angle sensor 44 is provided with a movable core 46 connected to the crank shaft (not shown) of the internal combustion engine and a pick-up 48 opposing to the movable core 46, and produces a pulse signal at each predetermined angular movement of the crank shaft, e.g. at every 1°. A reference crank angle sensor 49 has a movable core 50 connected to the crank shaft and a pick-up 51 opposing to the movable core 50, and produces an output pulse at each time the crank shaft passes the top dead center. The pulse of the sensor 44 is in synchronization with that of the sensor 49.

Afirst operation unit 52 is adapted to accumulate, in accordance with the outputs from the data processing unit 42, crank angle sensors 44, 49 and memory devices 53, 54, 56 and 58, the airflow rate signal represented by the data processing unit 42 to divide the calculated value into the flow rate Q₁ in the backward direction and the flow rate Q₂ in the forward direction. A second operation unit 60 serves to determine the difference between the flow rates Q₁ and Q₂.

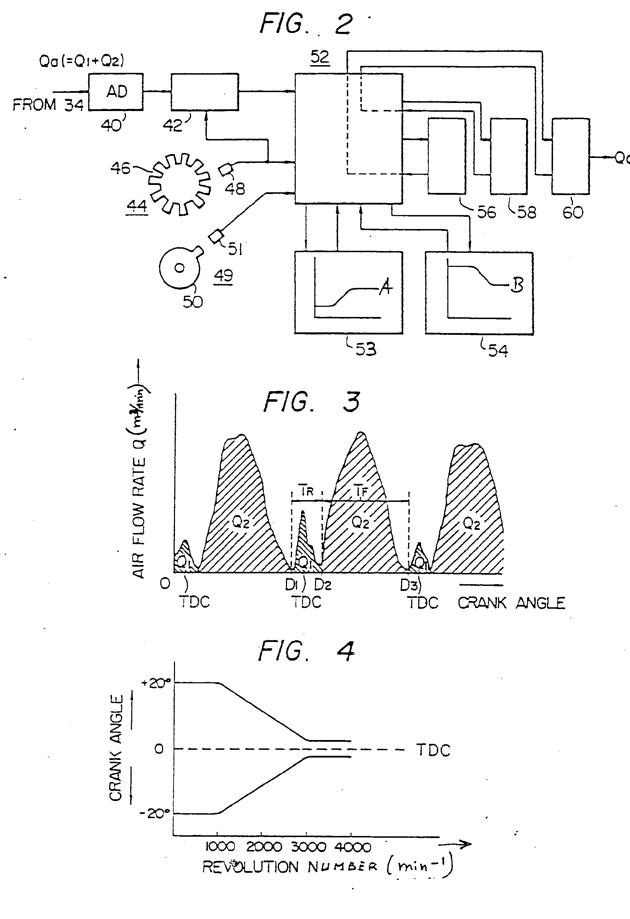

The intake air-flow rate in a 4-cylinder engine, particularly when the engine speed is low, pulsates in relation to time as shown in Fig. 3. A reversing of air from the exhaust valve side to the intake valve side is observed when the piston takes a position around the top dead centerwhere both the exhaust valve and the intake valve are opened simultaneously. The hot wire type air-flow rate sensor 10 produces a detection signal irrespective of the flowing direction of the air, so that the output of the sensor has a pulsating waveform as shown in Fig. 3. In this Figure, T_{R} represents the period over which both the intake and exhaust valves are kept opened to permit the reversing of the intake air, while T_{F} represents the period in which the exhaust valve is opened solely to cause the air to flow in the forward direction. Thus, the flow rates in one suction stroke in the backward and forward directions are Q₁ (m³) and Q₂ (m³), respectively, and the true air flow rate Qₒ actually charged in one suction stroke in the cylinder is represented as the difference Q₂-Q₁.

The period T_{R} over which the backward flow takes place has a functional relation to the revolution speed of the engine as will be seen from Fig. 4. More specifically, this period corresponds to crank angles of about ±20° around the top dead center. The period is shortened as the engine speed is increased, and almost no reversing takes place at the high-speed region in excess of a rotational speed of 3000 min-¹.

The memory devices 53 and 54 are adapted to memorize a curve A representing the relationship between the crank angle of commencement of the backward or reverse flow of air and the engine speed, and a curve B representing the relationship between the crank angle at which the reverse flow is terminated and the engine speed, and deliver respective outputs in accordance with the engine speed derived from the first operation unit 52.

Representing the engine speed by N, (e.g. 500 min-'), the pick-up 48 of the crank angle sensor 44 delivers an output pulse corresponding to the speed N₁ to the input terminal of the operation unit 52 which is reading the crank angle corresponding to the engine speed N₁, e.g. 20° before the top dead center. As the crank shaft angle reaches D₁ shown in Fig. 3 (D₁: 20° before top dead center), the operation unit 52 decides upon receipt of the signal from the memory device 53 that the period of the reversing flow has just started, and the value accumulated by the data processing unit 42 from this moment is stored in the memory device 56. Then, as the crank shaft angle D₂ (20° after top dead center) is reached, the operation unit 52 judges that the period T_{R} of reversing flow is over, and stops to store the accumulated value in the memory device 56. Thereafter, the value accumulated by the data processing unit 42 is stored in the memory device 58. The value accumulated by the data processing unit 42 later than this moment is stored in the memory device 58 until the reversing start signal is generated. In consequence, the memory device 56 memorizes the air-flow rate Q₁ in the backward direction while the memory device 58 memorizes the air- flow rate Q₂ in the forward direction. The first operation unit 52 periodically reads out the content of memory of the memory devices 56 and 58 and delivers the read-out content to the second operation unit 60 to conduct the subtraction to calculate the true air-flow rate Qₒ, i.e. Q₂-Q_{1.}

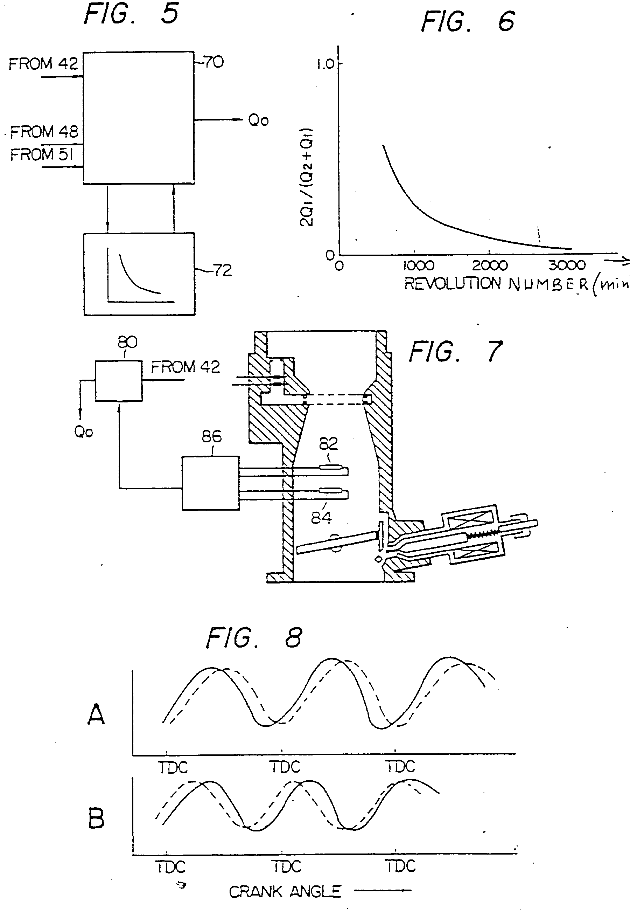

Referring now to Fig. 5 which is a block diagram of another embodiment, there are shown only an operation unit 70 for accumulating the signal of the data processing unit 42 and a memory device 72 for memorizing predetermined data. Fig. 6 shows the result of measurement of the ratio between the difference between the apparent total air-flow rate Qₒ (=Q₁+Q₂) and the true air flow rate Qₒ (=Q₂-Q₁), i.e. 20₁, and the apparent total intake air-flow rate Qₐ. Since the true air-flow rate Qₒ is expressed by the following equation (3), the true air flow rate is determined by executing this calculation:

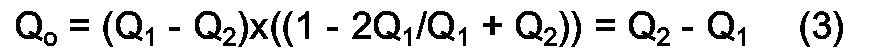

As shown in Fig. 6, the value 2Q₁/Q₁+(Q₂ is determined by the speed of the engine, so that the value 1-2Q₁/Q₁+(Q₁+Q₂ is beforehand memorized by the memory device 72. On the other hand, the operation unit 70 calculates the apparent total air flow rate Qₐ=Q₂+(Q₂+Q₁ and reads the content of the memory device 72 in accordance with the engine speed and performs the calculation of the equation (3) to determine the true air-flow rate Qₒ.

Fig. 7 shows still another embodiment of the invention. More specifically, this Figure shows only an operation unit 80, two hot wire type sensors 82, 84 and a drive control circuit 86. The waveforms of the signals from the sensors 82, 84 have a phase difference from each other in relation to the crank angle, as will be seen from Fig. 8A. During the sucking of air by the internal combustion engine, the output from the downstream side sensor 84 lags behind that from the upstream side sensor 82. This phase relation is reversed during the reverse or backward flow of the intake air, as shown in Fig. 8B. Therefore, the drive control circuit 86 detects the phases and makes a judgement and supplies a signal representing the reversing period to the operation unit 80 which in turn accumulates the output from the hotwire air-flow meter and determines the intake air-flow rates 0₁ and Q₂ in the backward and forward directions. Thereafter, the true air-flow rate Qₒ is determined in a manner identical to that explained before in connection with Fig. 2.

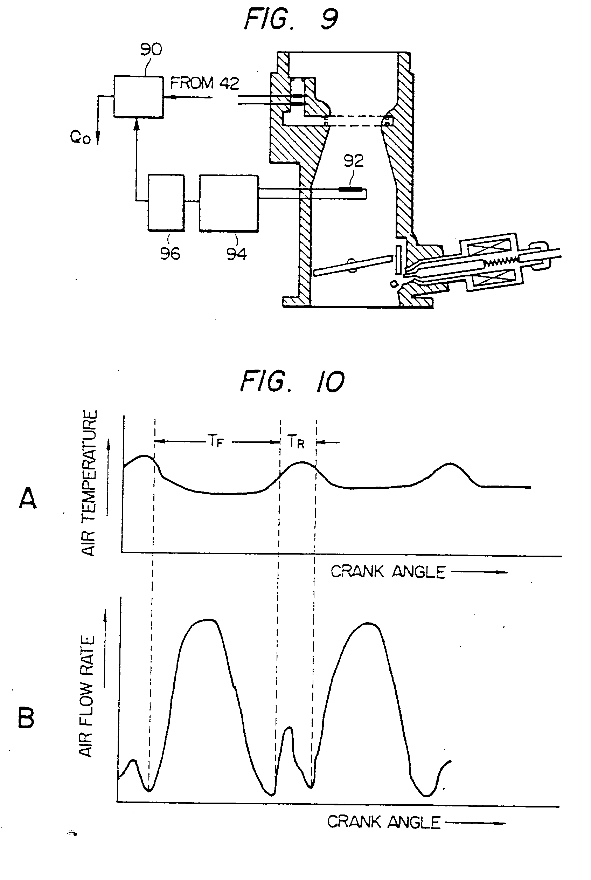

Fig. 9 shows a further embodiment. In this Figure, there are shown an operation unit 90, a temperature sensor 92, a drive control circuit 94 and a reverse flow discrimination circuit 96. As will be understood from Fig. 10, the temperature of the air during the reversing period T_{R} is higher than that during the period of forward flow of the air. It is, therefore, possible to obtain a signal representing the period of reverse flow by setting the temperature by the reverse flow discriminating circuit 96. Then, the true air-flow rate Qₒ is determined in the same manner as that explained before in connection with Figs. 2, 5, 7 and 9.

## Claims

1. Air-flow rate measuring device for 4-cylinder internal combustion engines
comprising
a hot wire air-flow meter including a hot wire air- flow rate measuring sensor (10) disposed in the intake air passage (24) of the engine and a control circuit (34) connected to the sensor (10), the hot wire air-flow meter being adapted to produce a first signal corresponding to the air-flow rate in the intake air passage (24),
characterized by
- reverse flow signal generating means (53) adapted to generate a second signal representing the period (T_{R}) of reverse airflow in the intake air passage (24);
- a first operation unit (52) connected to the control circuit (34) and to the reverse flow signal generating means (53) and being adapted to generate, upon accumulation of the first signal representing the air-flow rate within the period of one suction stroke a third signal representing the amount of air in that period of reverse flow represented by the second signal within the period of one suction stroke and a fourth signal representing the amount of air in the period (T_{F}) other than the period of reverse flow within the period of one suction stroke, and
- a second operation unit (60) adapted to substract the third signal from the fourth signal derived from the first operation unit (52).

2. The device according to claim 1,
characterized in that the reverse flow signal generating means are a memory device (53) adapted to memorize the start crank angle (Dᵢ) at which the reverse flow begins, and the termination crank angle (D₂) at which the reverse flow is terminated, in relation to the engine rotational speed, and to deliver these crank angles (D₁, D₂) in accordance with the actual engine speed.

3. The device according to claim 1, characterized in that the reverse flow signal generating means include a pair of hot wire type sensors (82, 84) disposed at an upstream portion and a downstream portion of the intake air passage (24), and a drive control circuit (86) adapted to discriminate the phase relation between the output signals of the sensors (82, 84).

4. The device according to claim 1, characterized in that the reverse flow signal generating means include a temperature sensor (92) disposed in the intake air passage (24), a drive control circuit (94) connected to the temperature sensor (92), and a reverse flow discrimination circuit (96) adapted to produce an output signal over the time period in which the output signal from the drive control circuit (94) representing the air temperature exceeds a predetermined level.

## Patentansprüche

1. Luftdurchsatz-Meßvorrichtung für 4-Zylinder-Verbrennungsmotoren, bestehend aus:
einem Hitzedraht-Luftdurchsatzmesser mit einem Hitzedraht-Durchsatzmeßfühler (10) im Ansaugkanal (24) des Motors und einem mit dem Fühler (10) verbundenen Steuerkreis (34), wobei der Hitzedraht-Luftdurchsatzmessergeeignet ist, ein dem Luftdurchsatz durch den Ansaugkanal (24) entsprechendes erstes Signal zu erzeugen, gekennzeichnet durch einen Umkehrluftstrom-Signalgeber (53), der geeignet ist, ein zweites Signal zu erzeugen, das den Zeitraum (T_{R}) des Umkehrluftstroms im Ansaugkanal (24) angibt;
eine erste Operationseinheit (52), die mit dem Steuerkreis (34) und dem Umkehrluftstrom-Signalgeber (53) verbunden ist und geeignet ist, bei Akkumulation des den Luftdurchsatz innerhalb des Zeitraums eines Ansaughubes angebenden ersten Signals ein drittes Signal, das die Luftmenge innerhalb des Zeitraums des Umkehrluftstroms angibt, der von einem zweiten Signal innerhalb des Zeitraums eines Ansaughubes angegeben wird, sowie ein viertes Signal, das die Luftmenge innerhalb des Zeitraums (T_{F}) angibt, der von dem Zeitraum des Umkehrluftstroms in dem Zeitraum eines Ansaughubes verschieden ist, zu erzeugen;
und eine zweite Operationseinheit (60), die geeignet ist, das dritte Signal von dem von der ersten Oprationseinheit (52) stammenden vierten Signal zu subtrahieren.

2. Vorrichtung nach Anspruch 1,
dadurch gekennzeichnet, daß der Umkehrluftstrom-Signalgeber eine Speichervorrichtung (53) ist, die geeignet ist, den Anfangskurbelwinkel (D₁), bei dem der Umkehrluftstrom beginnt, und den Endkurbelwinkel (D₂), bei dem der Umkehrluftstrom beendet wird, relativ zur Motordrehzahl zu speichern und diese Kurbelwinkel (D₁, D₂) nach Maßgabe der Ist-Motordrehzahl auszugeben.

3. Vorrichtung nach Anspruch 1,
dadurch gekennzeichnet, daß der Umkehrluftstrom-Signalgeber zwei Hitzedrahtfühler (82, 84), die an einem Aufstromabschnitt und einem Abstromabschnitt des Ansaugkanals (24) angeordnet sind, sowie einen Steuerkreis (86), der geeignet ist, das Phasenverhältnis zwischen den Ausgangssignalen der Fühler (82, 84) zu erfassen, aufweist.

4. Vorrichtung nach Anspruch 1,
dadurch gekennzeichnet, daß der Umkehrluftstrom-Signalgeber einen Temperaturfühler (92), der in dem Ansaugkanal (24) angeordnet ist, einen mit dem Temperaturfühler (92) verbundenen Steuerkreis (94) und einen Umkehrluftstrom-Erfassungskreis (96) aufweist, der geeignet ist, ein Ausgangssignal während derZeitdauerzu erzeugen, in der das Ausgangssignal des Steuerkreises (94), das die Lufttemperatur angibt, einen vorbestimmten Pegel übersteigt.

## Revendications

1. Dispositif de mesure de débit d'air pour des moteurs à combustion interne à 4 cylindres, comprenant
un débitmètre d'air à fil chaud comprenant un capteur (10) de mesure du débit d'air à fil chaud, disposé dans le passage d'admission d'air (24) du moteur et un circuit de commande (34) raccordé au capteur (10),
le débitmètre d'air à fil chaud étant adapté pour produire un premier signal correspondant au débit d'air dans le passage d'air d'admission (24), caractérisé par
- des moyens (53) de production d'un signal d'écoulement inverse, aptes à produire un second signal représentant la période (T_{R}) d'apparition de l'écoulement inverse d'air dans le passage d'air d'admission (24);
- une première unité opérationnelle (52) raccordée au circuit de commande (34) et aux moyens (53) de production d'un signal d'écoulement inverse, et apte à produire, lors de l'accumulation du premier signal représentant le débit d'air pendant l'intervalle de temps d'une course d'aspiration, un troisième signal représentant la quantité d'air apparue pendant la période d'apparition de l'écoulement inverse, représentée par le second signal, pendant l'intervalle de temps d'une course d'aspiration, et un quatrième signal représentant la quantité d'air pendant la période (T_{F}) autre que la période d'écoulement inverse, pendant l'intervalle de temps d'une course d'aspiration, et
- une seconde unité opérationnelle (60) apte à soustraire le troisième signal du quatrième signal tiré de ladite première unité opérationnelle (52).

2. Dispositif selon la revendication 1, caractérisé en ce que les moyens de production du signal d'écoulement inverse sont formés par un dispositif de mémoire (53) apte à mémoriser l'angle initial (Dᵢ) du vilebrequin, pour lequel l'écoulement inverse commence, et l'angle final (D₂) du vilebrequin, pour lequel l'écoulement inverse s'arrête, en liaison avec la vitesse de rotation du moteur, et délivrer ces angles (D₁, D₂) du vilebrequin en fonction de la vitesse actuelle du moteur.

3. Dispositif selon la revendication 1, caractérisé en ce que les moyens de production du signal d'écoulement inverse comprennent un couple de capteurs du type à fil chaud (82,84), disposés dans une partie amont et dans une partie aval du passage d'air d'admission (24), et un circuit de commande d'entraînement (86) apte à discriminer la relation de phase entre les signaux de sortie des capteurs (82, 84).

4. Dispositif selon la revendication 1, caractérisé en ce que les moyens de production du signal d'écoulement inverse comprennent un capteur de température (92) disposé dans le passage d'air d'admission (24), un circuit de commande d'entraînement (94) raccordé au capteur de température (92), et un circuit (96) de discrimination de l'écoulement inverse, apte à produire un signal de sortie pendant l'intervalle de temps pendant lequel le signal de sortie délivré par le circuit de commande d'entraînement (94) représentant la température de l'air dépasse un niveau prédéterminé.
